# FASCICULE DE BREVET EUROPEEN

(11) **EP 2 771 173 B1**
(45) Date de publication et mention de la délivrance du brevet: **10.01.2018**
(21) Numéro de dépôt: 12791517.1
(22) Date de dépôt: 17.10.2012
(51) Int. Cl.: B29C 70/32, B29C 70/54, B29C 53/56, B29C 53/80, B29C 53/82, F01D 25/24, B29L 31/00

(54) **MANDRIN D'IMPREGNATION A MAINTIEN PAR PINCEMENT POUR LA REALISATION DE CARTERS DE TURBINE A GAZ EN MATERIAU COMPOSITE**
IMPRÄGNIERUNG EINES DORNS MIT EINEM KLEMMSYSTEM ZUR HERSTELLUNG VON GASTURBINENGEHÄUSEN AUS EINEM VERBUNDWERKSTOFF
IMPREGNATION MANDREL COMPRISING A CLAMPING SYSTEM FOR THE PRODUCTION OF GAS TURBINE CASINGS FROM COMPOSITE MATERIAL

(30) Priorité: 26.10.2011 US 201161551539 P
(43) Date de publication de la demande: 03.09.2014
(73) Titulaire: Snecma, 75015 Paris (FR)
(72) Inventeur: MATHON, Richard, 91800 Brunoy (FR); PATRIGEON, Olivier, F-92000 Nanterre (FR)
(74) Mandataire: Boura, Olivier
(86) Numéro de dépôt international: PCT/FR2012/052366
(87) Numéro de publication internationale: WO 2013/060965

(56) Documents cités:
- EP-A1- 1 938 955
- EP-A1- 2 308 670
- DE-A1-102008 028 441
- FR-A1- 2 945 573

## Description

### Arrière-plan de l'invention

La présente invention se rapporte au domaine général des carters de turbine à gaz, et plus particulièrement des carters de rétention pour soufflante de turbine à gaz pour moteurs aéronautiques.

Dans un moteur aéronautique à turbine à gaz, un carter de soufflante remplit plusieurs fonctions. Il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce dernier constitue un piège retenant les débris, tels que des objets ingérés ou des fragments d'aubes endommagées, projetés par la centrifugation, afin d'éviter qu'ils traversent le carter et atteignent d'autres parties de l'aéronef.

La réalisation d'un carter de rétention de soufflante en matériau composite a déjà été proposée. On pourra par exemple se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Selon cette invention, la texture fibreuse est réalisée par tissage tridimensionnel avec épaisseur évolutive et est enroulée en plusieurs couches superposées sur un mandrin de profil correspondant à celui du carter à fabriquer. La préforme fibreuse ainsi obtenue est maintenue sur le mandrin et une imprégnation par résine est réalisée avant polymérisation. L'enroulement sur un mandrin d'une texture tissée d'épaisseur évolutive comme décrit dans ce document permet de disposer directement d'une préforme tubulaire ayant le profil désiré avec épaisseur variable.

En pratique, la mise en oeuvre de ce procédé pose le problème du maintien de la préforme fibreuse lors de son enroulement sur le mandrin. Lors de cet enroulement, il convient en effet d'exercer un effort de traction suffisant sur chaque couche de texture fibreuse pour assurer un compactage efficace de celles-ci. Cela nécessite en particulier que la première couche de texture fibreuse qui est enroulée sur le mandrin soit correctement arrimée à celui-ci avant d'enrouler les couches suivantes.

A cet effet, il est connu du document FR 2,945,573 un mandrin d'imprégnation conformément au préambule de la revendication 1, dans lequel l'accrochage de la première couche de texture fibreuse est réalisée par une plaque amovible munie de pointes qui viennent pénétrer dans la couche de texture fibreuse. Bien qu'efficace, ce type d'accrochage peut présenter le risque de voir les pointes de la plaque endommager la préforme fibreuse si une tension d'enroulement trop forte est appliquée sur celle-ci.

### Objet et résumé de l'invention

La présente invention a donc pour but principal de pallier de tels inconvénients en proposant un accrochage mécanique de la première couche de texture fibreuse qui permette d'appliquer une forte tension d'enroulement sans risque d'endommager la préforme fibreuse.

Ce but est atteint grâce à un mandrin d'imprégnation pour la réalisation de carters de turbine à gaz en matériau composite, conformément à la revendication 1. Le maintien par pincement de l'extrémité libre de la couche de texture fibreuse enroulée sur le mandrin évite tout risque de détérioration de la préforme quelle que soit la tension d'enroulement appliquée sur celle-ci. De plus, ce dispositif de maintien par pincement est amovible de sorte qu'il peut être retiré avant l'imprégnation par résine afin d'éviter tout risque de dégradation de la préforme lors de l'opération de polymérisation à chaud. Enfin, le maintien de la première couche de texture fibreuse sur le mandrin est mécanique (et non chimique) ce qui lui assure une totale innocuité sur la préforme avant l'imprégnation par résine. Selon l'invention, le dispositif de maintien par pincement comprend une plaque amovible destinée à être positionnée dans un évidement correspondant pratiqué au travers de la paroi du mandrin, ladite plaque comprenant une surface extérieure dont le profil est apte à reconstituer le profil de la surface extérieure du mandrin et une fente s'étendant en situation entre les flasques latéraux du mandrin et destinée à recevoir une extrémité libre de la couche de texture fibreuse enroulée sur le mandrin.

De préférence, le dispositif de maintien par pincement comprend en outre une cale de serrage apte à venir exercer un effort de pincement sur l'extrémité libre de la couche de texture fibreuse enroulée sur le mandrin par l'intermédiaire de vis de serrage. Les vis de serrage sont avantageusement accessibles par l'intérieur du mandrin.

La plaque du dispositif de maintien par pincement peut comprendre des brides de fixation qui sont destinées en situation à être fixées sur la paroi annulaire du mandrin par l'intermédiaire de vis de fixation.

De plus, la plaque du dispositif de maintien par pincement peut comprendre une poignée accessible depuis l'intérieur du mandrin lorsque la plaque de maintien par pincement est en situation.

L'invention a également pour objet une machine d'enroulement d'une texture fibreuse sur un mandrin d'imprégnation, comprenant un mandrin d'appel sur lequel est destiné à être stockée une texture fibreuse obtenue par tissage tridimensionnel, le mandrin d'appel ayant un axe de rotation sensiblement horizontal, un mandrin d'imprégnation tel que défini précédemment et sur lequel est destinée à être enroulée en couches superposées la texture fibreuse stockée sur le mandrin d'appel, le mandrin d'imprégnation ayant un axe de rotation sensiblement horizontal et parallèle à l'axe de rotation du mandrin d'appel, des moteurs électriques pour entraîner en rotation les mandrins autour de leur axe de rotation respectif, et une unité de commande des moteurs électriques d'entraînement en rotation des mandrins.

L'invention a encore pour objet un procédé d'imprégnation d'une texture fibreuse pour la réalisation de carters de turbine à gaz en matériau composite, comprenant l'enroulement d'une première couche de texture fibreuse sur un mandrin d'imprégnation tel que défini précédemment, le maintien sur le mandrin d'imprégnation d'une extrémité libre de la première couche de texture fibreuse par l'intermédiaire du dispositif de maintien par pincement, l'enroulement d'autres couches de texture fibreuse sur le mandrin d'imprégnation, le retrait du dispositif de maintien par pincement et son remplacement par un obturateur étanche, et l'imprégnation de la texture fibreuse enroulée sur le mandrin par injection d'une résine.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et de côté d'une machine d'enroulement d'une texture fibreuse sur un mandrin d'imprégnation conforme à l'invention ;
- la figure 2 est une vue en perspective du mandrin d'imprégnation de la figure 1 ;
- la figure 3 est une vue en coupe selon III-III de la figure 2 ; et
- la figure 4 est une vue correspondant à la figure 3 montrant le mandrin d'imprégnation en fin d'enroulement.

### Description détaillée de l'invention

L'invention sera décrite ci-après dans le cadre de son application à la fabrication d'un carter de soufflante de moteur aéronautique à turbine à gaz.

Un exemple de procédé de fabrication d'un tel carter de soufflante est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Brièvement, le procédé de fabrication décrit dans ce document consiste à réaliser une texture fibreuse par tissage tridimensionnel avec appel en chaîne sur un tambour (appelé ci-après mandrin d'appel) ayant un profil déterminé en fonction du profil du carter à fabriquer.

La texture fibreuse ainsi réalisée est ensuite transférée sur le mandrin d'un moule d'injection de résine (ci-après appelé mandrin d'imprégnation) dont le profil extérieur correspond au profil interne du carter à fabriquer.

La préforme étant maintenue sur le mandrin d'imprégnation, une imprégnation est alors réalisée par une résine. A cet effet, une enveloppe est appliquée sur la préforme et la résine est injectée dans le moule ainsi constitué. L'imprégnation peut être assistée par établissement d'une différence de pression entre l'intérieur et l'extérieur du moule dans lequel se trouve la préforme. Après imprégnation, une étape de polymérisation de la résine est réalisée.

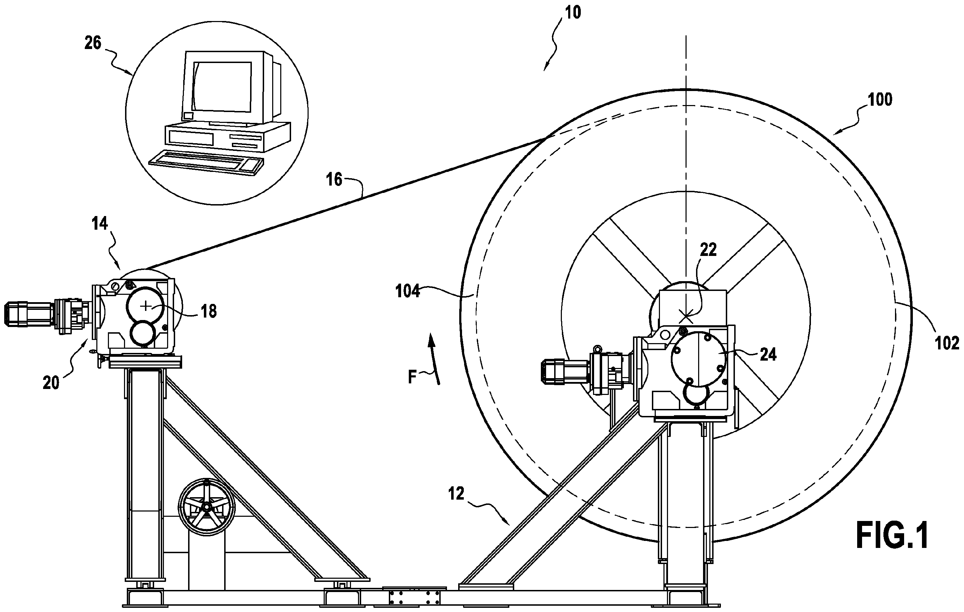

L'invention s'applique à tout type de machine d'enroulement ayant pour fonction de permettre un transfert automatisé de la texture fibreuse stockée sur le mandrin d'appel vers le mandrin d'imprégnation du moule d'injection de résine, telle que celle représentée sur la figure 1.

On pourra se référer à la demande de brevet FR 11 53212 (non publiée à ce jour) qui décrit en détails la structure et le fonctionnement d'une telle machine.

Brièvement, la machine d'enroulement 10 comprend un bâti 12 supportant notamment un mandrin d'appel 14 et un mandrin d'imprégnation 100 conforme à l'invention. Ces mandrins sont amovibles, c'est-à-dire qu'ils peuvent être démontés du bâti.

Le mandrin d'appel 14 reçoit la texture fibreuse 16 obtenue par exemple par tissage tridimensionnel. Il est porté par un axe horizontal 18 dont une extrémité est montée de façon rotative sur le bâti 12 de la machine d'enroulement et l'autre extrémité est couplée à l'arbre de sortie d'un moteur électrique 20, par exemple un motoréducteur électrique à courant alternatif.

L'ensemble constitué du mandrin d'appel 14, de son axe 18 et de son moteur électrique 20 peuvent translater par rapport au bâti le long de l'axe de rotation du mandrin d'appel. Ce degré de liberté en translation du mandrin d'appel permet de réaliser un alignement de ce mandrin sur le mandrin d'imprégnation préalablement à l'enroulement de la texture fibreuse sur le mandrin d'imprégnation.

Le mandrin d'imprégnation 100 de la machine d'enroulement est destiné à recevoir en couches superposées la texture fibreuse stockée sur le mandrin d'appel. De façon connue en soi, il présente une paroi annulaire 102 dont le profil de la surface extérieure correspond à celui de la surface interne du carter à réaliser et deux flasques latéraux 104 dont les profils correspondent à ceux des brides externes du carter à ses extrémités amont et aval afin de permettre son montage et sa liaison avec d'autres éléments.

Le mandrin d'imprégnation est porté par un axe horizontal 22 qui est parallèle à l'axe de rotation 18 du mandrin d'appel et dont l'une extrémité est montée de façon rotative sur le bâti 12 de la machine d'enroulement et l'autre extrémité est couplée à l'arbre de sortie d'un moteur électrique 24, par exemple un motoréducteur électrique à courant alternatif.

Une unité de commande 26 est reliée aux moteurs électriques 20, 24 des deux mandrins et permet de commander et contrôler de la vitesse de rotation de chaque mandrin. De manière plus générale, cette unité de commande permet de piloter l'ensemble des paramètres de fonctionnement de la machine d'enroulement, et notamment le déplacement en translation du mandrin d'appel lorsque celui-ci est motorisé.

Avec une telle machine, l'enroulement de la texture fibreuse sur le mandrin d'imprégnation s'effectue de la façon suivante : l'extrémité libre de la texture fibreuse du mandrin d'appel est d'abord fixée sur le mandrin d'imprégnation au moyen d'un dispositif de maintien par pincement décrit ci-après, puis les moteurs d'entraînement en rotation des mandrins sont activés et pilotés par l'unité de commande de façon à appliquer une tension d'enroulement adéquate sur la texture fibreuse.

L'enroulement de la texture fibreuse sur le mandrin d'imprégnation peut alors débuter et s'effectue selon le sens de rotation repéré par la flèche F sur la figure 1. A titre d'exemple, il pourra être nécessaire de réaliser 4 tours 1/8 pour obtenir une préforme de carter ayant une épaisseur conforme aux spécifications.

Selon l'invention, le mandrin d'imprégnation 100 comprend un dispositif amovible de maintien par pincement de l'extrémité libre 28 de la première couche 16a de texture fibreuse qui est enroulée sur le mandrin d'imprégnation.

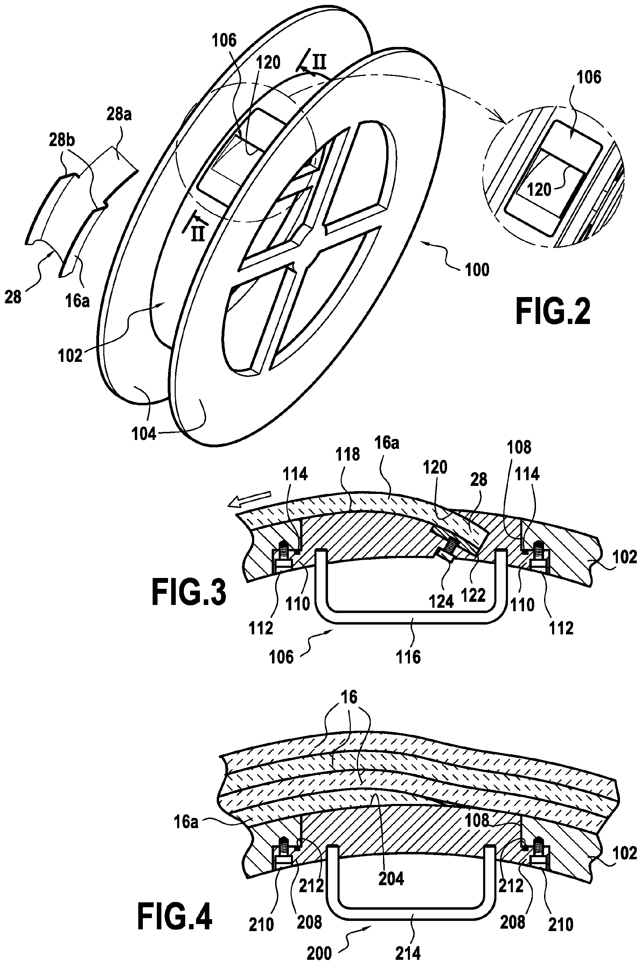

Plus précisément, comme représenté sur la figure 2, ce dispositif comprend notamment une plaque 106 qui permet d'assurer un maintien par pincement de cette extrémité libre de la première couche de texture fibreuse.

Cette plaque 106 est amovible et est destinée à être positionnée au début de l'opération d'enroulement dans un évidement 108 correspondant pratiqué au travers de la paroi annulaire 102 du mandrin. La plaque du dispositif de maintien par pincement comprend à cet effet deux brides de fixation 110 opposées qui sont fixées sur la paroi annulaire du mandrin par l'intermédiaire de vis de fixation 112, des joints d'étanchéité 114 pouvant également être insérés entre les brides et la paroi annulaire du mandrin.

La plaque 106 peut également comprendre une poignée 116 qui facilite sa préhension. On notera que cette poignée et les vis de fixation 112 sont accessibles depuis l'intérieur du mandrin d'imprégnation.

La surface extérieure 118 de la plaque 106 du dispositif de maintien par pincement est profilée de façon à reconstituer le profil de la surface extérieure de la paroi annulaire 102 du mandrin d'imprégnation lorsqu'elle est montée sur celle-ci.

La plaque 106 du dispositif de maintien par pincement présente en outre une fente 120 s'étendant transversalement entre les deux flasques latéraux 104 du mandrin, cette fente étant dimensionnée pour recevoir l'extrémité libre 28 de la première couche 16a de texture fibreuse enroulée sur le mandrin pour la maintenir par pincement.

De plus, une cale de serrage 122 est logée à l'intérieur de la plaque au niveau de la fente 120, cette cale étant apte à être serrée contre l'extrémité libre 28 de la première couche 16a de texture fibreuse au moyen de vis de serrage 124 accessibles depuis l'intérieur du mandrin (figure 3). Ainsi, une fois l'extrémité de la première couche de texture fibreuse insérée dans la fente de la plaque par pincement, les vis de serrage 124 sont vissées de sorte à exercer un effort de pincement de cette extrémité de couche de texture fibreuse entre la cale de serrage 122 et la paroi annulaire 102 de la plaque 106.

On notera que seule la partie 28a de l'extrémité 28 de la première couche 16a de texture fibreuse qui est destinée à reconstituer la surface interne du carter à réaliser est maintenue par pincement sur le mandrin d'imprégnation (les parties de cette extrémité de la première couche de texture fibreuse qui sont destinées à reconstituer les brides externes du carter à réaliser ne le sont pas). En effet, aucune tension d'enroulement n'est appliquée au niveau de ses parties de la texture fibreuse lors de son enroulement sur le mandrin d'imprégnation, de sorte qu'il n'est pas nécessaire de prévoir un maintien de celles-ci. De plus, cette solution présente l'avantage de simplifier le dispositif de maintien.

Aussi, pour que seule la partie 28a de l'extrémité 28 de la première couche de texture fibreuse qui est destinée à reconstituer la surface interne du carter à réaliser soit insérée dans la fente 120 de la plaque 106 pour y être maintenue par pincement, il est nécessaire au préalable de réaliser une découpe de cette extrémité libre 28 comme schématisée sur la figure 1, notamment au niveau des parties 28b qui reconstitueront les brides externes du carter.

Une fois l'ensemble des couches de texture fibreuse enroulées sur le mandrin d'imprégnation, le dispositif de maintien par pincement est retiré avant l'opération d'imprégnation par la résine. A cet effet, les vis de serrage 124 de la cale de serrage, ainsi que les vis fixation 112 de la plaque 106 sont dévissées de sorte à pouvoir libérer la plaque de son logement 108 dans le mandrin d'imprégnation.

Une fois la plaque 106 retirée, l'extrémité libre de la première couche 16a de texture fibreuse qui fait saillie à l'intérieur du mandrin peut être découpée, par exemple à l'aide d'une lame de cutter. Alternativement, cette extrémité libre peut être laissée en place, ce qui nécessite d'adapter en conséquence la géométrie de l'obturateur étanche décrit ci-après de façon à intégrer la surépaisseur liée à cette couche.

Un obturateur étanche 200 tel que celui représenté sur la figure 4 est alors positionné dans le logement 108 du mandrin d'imprégnation à la place de la plaque 106 du dispositif de maintien par pincement. Un tel obturateur est en tout point identique à la plaque excepté qu'il ne présente pas de fente ni de cale de serrage. Notamment, celui-ci présente une surface extérieure 204 reconstituant le profil de la surface extérieure de la paroi annulaire du mandrin et peut être fixé sur celle-ci par l'intermédiaire de brides de fixation 208 et de vis 210 (des joints d'étanchéité 212 peuvent également être insérés). L'obturateur comprend également une poignée 214 accessible depuis l'intérieur du mandrin. Une fois l'obturateur 200 en place et fixé sur le mandrin d'imprégnation, l'opération d'imprégnation par la résine peut alors débuter.

## Revendications

1. Mandrin d'imprégnation (100) pour la réalisation de carters de turbine à gaz en matériau composite, le mandrin comprenant une paroi annulaire (102) dont le profil de la surface extérieure correspond à celui de la surface interne du carter à réaliser, et deux flasques latéraux (104) dont les profils correspondent à ceux de brides externes du carter à réaliser, et comprenant en outre un dispositif amovible de maintien, **caractérisé en ce que** ledit dispositif de maintien est un dispositif de maintien par pincement d'une couche de texture fibreuse enroulée sur le mandrin, le dispositif comprenant une plaque (106) amovible destinée à être positionnée dans un évidement (108) correspondant pratiqué au travers de la paroi du mandrin, ladite plaque comprenant une surface extérieure dont le profil est apte à reconstituer le profil de la surface extérieure du mandrin et une fente (120) s'étendant en situation entre les flasques latéraux du mandrin et destinée à recevoir une extrémité libre (28) de la couche de texture fibreuse enroulée sur le mandrin.

2. Mandrin selon la revendication 1, dans lequel le dispositif de maintien par pincement comprend en outre une cale de serrage (122) apte à venir exercer un effort de pincement sur l'extrémité libre de la couche de texture fibreuse enroulée sur le mandrin par l'intermédiaire de vis de serrage (124).

3. Mandrin selon la revendication 2, dans lequel les vis de serrage (124) sont accessibles par l'intérieur du mandrin.

4. Mandrin selon l'une quelconque des revendications 1 à 3, dans lequel la plaque (106) du dispositif de maintien par pincement comprend des brides de fixation (110) qui sont destinées en situation à être fixées sur la paroi annulaire du mandrin par l'intermédiaire de vis de fixation (122).

5. Mandrin selon l'une quelconque des revendications 1 à 4, dans lequel la plaque (106) du dispositif de maintien par pincement comprend une poignée (116) accessible depuis l'intérieur du mandrin lorsque la plaque de maintien par pincement est en situation.

6. Machine d'enroulement (10) d'une texture fibreuse sur un mandrin d'imprégnation, comprenant :
un mandrin d'appel (14) sur lequel est destiné à être stockée une texture fibreuse (16) obtenue par tissage tridimensionnel, le mandrin d'appel ayant un axe de rotation (18) sensiblement horizontal ;
un mandrin d'imprégnation (100) selon l'une quelconque des revendications 1 à 5 sur lequel est destinée à être enroulée en couches superposées la texture fibreuse stockée sur le mandrin d'appel, le mandrin d'imprégnation ayant un axe de rotation (22) sensiblement horizontal et parallèle à l'axe de rotation du mandrin d'appel ;
des moteurs électriques (20, 24) pour entraîner en rotation les mandrins autour de leur axe de rotation respectif ; et
une unité de commande (26) des moteurs électriques d'entraînement en rotation des mandrins.

7. Procédé d'imprégnation d'une texture fibreuse pour la réalisation de carters de turbine à gaz en matériau composite, comprenant :
- l'enroulement d'une première couche (16a) de texture fibreuse sur un mandrin d'imprégnation selon l'une quelconque des revendications 1 à 5 ;
- le maintien sur le mandrin d'imprégnation d'une extrémité libre (28) de la première couche de texture fibreuse par l'intermédiaire du dispositif de maintien par pincement ;
- l'enroulement d'autres couches de texture fibreuse sur le mandrin d'imprégnation ;
- le retrait du dispositif de maintien par pincement et son remplacement par un obturateur étanche (200) ; et
l'imprégnation de la texture fibreuse enroulée sur le mandrin par injection d'une résine.

## Patentansprüche

1. Imprägnierdorn (100) für die Herstellung von Gasturbinengehäusen aus Verbundwerkstoff, wobei der Dorn eine ringförmige Wand (102), deren Außenflächenprofil demjenigen der Innenfläche des herzustellenden Gehäuses entspricht, und zwei Seitenflansche (104) umfasst, deren Profile denjenigen von Außenflanschen des herzustellenden Gehäuses entsprechen, sowie ferner eine lösbare Haltevorrichtung umfasst,
**dadurch gekennzeichnet, dass** die Haltevorrichtung eine Vorrichtung zur Klemmhalterung einer auf den Dorn aufgewickelten Faserstrukturlage ist, wobei die Vorrichtung eine lösbare Platte (106) umfasst, die dazu bestimmt ist, in einer entsprechenden, durch die Wand des Dorns ausgebildeten Ausnehmung (108) angeordnet zu werden, wobei die Platte eine Außenfläche, deren Profil geeignet ist, das Profil der Außenfläche des Dorns nachzubilden, sowie einen Schlitz (120) aufweist, der sich in Position zwischen den Seitenflanschen des Dorns erstreckt und der dazu bestimmt ist, ein freies Ende (28) der auf den Dorn aufgewickelten Faserstrukturlage aufzunehmen.

2. Dorn nach Anspruch 1, bei dem die Klemmhaltevorrichtung ferner einen Klemmkeil (122) umfasst, der geeignet ist, auf das freie Ende der auf den Dorn aufgewickelten Faserstrukturlage mittels Klemmschrauben (124) eine Klemmkraft auszuüben.

3. Dorn nach Anspruch 2, bei dem die Klemmschrauben (124) über die Innenseite des Dorns zugänglich sind.

4. Dorn nach einem der Ansprüche 1 bis 3, bei dem die Platte (106) der Klemmhaltevorrichtung Befestigungsflansche (110) umfasst, die in Position dazu bestimmt sind, an der ringförmigen Wand des Dorns mittels Befestigungsschrauben (122) befestigt zu werden.

5. Dorn nach einem der Ansprüche 1 bis 4, bei dem die Platte (106) der Klemmhaltevorrichtung einen Griff (116) umfasst, der von der Innenseite des Dorns aus zugänglich ist, wenn die Klemmhalteplatte in Position ist.

6. Maschine zum Aufwickeln (10) einer Faserstruktur auf einen Imprägnierdorn, umfassend:
einen Abrufdorn (14), auf dem eine durch dreidimensionales Weben erhaltene Faserstruktur (16) gelagert werden soll, wobei der Abrufdorn eine im Wesentlichen horizontale Rotationsachse (18) hat,
einen Imprägnierdorn (100) nach einem der Ansprüche 1 bis 5, auf den die auf dem Abrufdorn gelagerte Faserstruktur in übereinander angeordneten Lagen aufgewickelt werden soll, wobei der Imprägnierdorn eine im Wesentlichen horizontale und zu der Rotationsachse des Abrufdorns parallele Rotationsachse (22) hat,
Elektromotoren (20, 24), um die Dorne um ihre jeweilige Rotationsachse drehanzutreiben, und
eine Einheit zur Steuerung (26) der Elektromotoren zum Drehantreiben der Dorne.

7. Verfahren zum Imprägnieren einer Faserstruktur für die Herstellung von Gasturbinengehäusen aus Verbundwerkstoff, umfassend:
- das Aufwickeln einer ersten Faserstrukturlage (16a) auf einen Imprägnierdorn nach einem der Ansprüche 1 bis 5,
- das Halten eines freien Endes (28) der ersten Faserstrukturlage an dem Imprägnierdorn mittels der Klemmhaltevorrichtung,
- das Aufwickeln von weiteren Faserstrukturlagen auf den Imprägnierdorn,
- das Entfernen der Klemmhaltevorrichtung und ihr Ersetzen durch einen dichten Verschluss (200), und
das Imprägnieren der auf den Dorn gewickelten Faserstruktur durch Einspritzen eines Harzes.

## Claims

1. An impregnation mandrel (100) for making gas turbine casings made of composite material, the mandrel comprising an annular wall (102) the profile of the external surface of which corresponds to that of the internal surface of the casing to be made, and two lateral flanges (104) the profiles of which correspond to those of external flanges of the casing to be made, and further comprising removable clamping device, **characterized in that** said clamping device is a clamping device of a layer of fibrous texture wound on the mandrel, said clamping device comprising a removable clamping plate (106) intended to be positioned in a corresponding recess (108) made through the wall (102) of the mandrel, said plate comprising an external surface whereof the profile is capable of reconstituting the profile of the external surface of the mandrel and a slot (120) extending in position between the lateral flanges of the mandrel and intended to receive a free end (28) of the layer of fibrous texture wound on the mandrel.

2. The mandrel according to claim 1, wherein the clamping device further comprise a pad (122) capable of exerting a clamping force on the free end of the layer of fibrous texture wound on the mandrel by means of tightening screws (124).

3. The mandrel according to claim 2, wherein the tightening screws (124) are accessible from the interior of the mandrel.

4. The mandrel according to any one of claims 1 to 3, wherein the clamping plate (106) comprises fixing flanges (110) which when in position are intended to be fixed on the annular wall of the mandrel by means of fixing screws (122).

5. The mandrel according to any one of claims 1 to 4, wherein the clamping plate (106) comprises a grip (116) accessible from the interior of the mandrel when the clamping plate is in position.

6. A winding machine (10) of a fibrous texture on an impregnation mandrel, comprising:
a take-up mandrel (14) on which a fibrous texture (16) produced by three-dimensional weaving is intended to be stored, the take-up mandrel having a substantially horizontal axis of rotation (18);
an impregnation mandrel (100) according to any one of claims 1 to 5 on which the fibrous texture stored on the take-up mandrel is intended to be wound in superposed layers, the impregnation mandrel having a substantially horizontal axis of rotation (22) parallel to the axis of rotation of the take-up mandrel ;
electric motors (20, 24) for driving the mandrels in rotation about their respective axis of rotation; and
a control unit (26) of the electric motors driving the mandrels in rotation.

7. An impregnation method of a fibrous texture for making gas turbine casings made of material composite, comprising:
winding a first layer (16a) of fibrous texture on an impregnation mandrel according to any one of claims 1 to 5;
maintaining a free end (28) of the first layer of fibrous texture on the impregnation mandrel by means of the clamping device;
winding other layers of fibrous texture on the impregnation mandrel;
withdrawal of the clamping device and its replacement by a sealing plug (200); and
impregnating the fibrous texture wounded on the mandrel par resin injection.
